# FASCICULE DE BREVET EUROPEEN

(11) **EP 3 445 628 B1**
(45) Date de publication et mention de la délivrance du brevet: **17.06.2020**
(21) Numéro de dépôt: 17722093.6
(22) Date de dépôt: 11.04.2017
(51) Int. Cl.: B61B 12/02

(54) **INSTALLATION DE TRANSPORT PAR CÂBLE**
KABELTRANSPORTEINRICHTUNG
CABLE TRANSPORT INSTALLATION

(30) Priorité: 22.04.2016 FR 1653582
(43) Date de publication de la demande: 27.02.2019
(73) Titulaire: POMA, 38340 Voreppe (FR)
(72) Inventeur: RICHARD, Jérôme, 38920 Crolles (FR); PAYAN, André, 38100 Grenoble (FR)
(74) Mandataire: Talbot, Alexandre
(86) Numéro de dépôt international: PCT/FR2017/050870
(87) Numéro de publication internationale: WO 2017/182736

(56) Documents cités:
- EP-A1- 0 207 850
- EP-A2- 0 281 205
- WO-A1-2009/130239
- DE-A1- 19 704 825
- US-A1- 2015 083 016

## Description

### Domaine technique de l'invention

L'invention concerne les installations de transport par câble, et plus particulièrement les installations de transport par câble tracteur aérien.

### État de la technique

Actuellement, les installations de transport par câble tracteur aérien comportent des pylônes afin de pouvoir franchir des obstacles dus à la configuration du relief. Ces pylônes comportent généralement des galets, notés galets de guidage, afin de pouvoir dévier le câble tracteur selon une courbure verticale vers le haut ou vers le bas. Pour franchir ces pylônes, les pinces des véhicules accrochés au câble tracteur doivent donc être adaptées pour passer sur les galets lors du franchissement de l'ouvrage par les véhicules. Ce franchissement est complexe car les galets doivent à la fois permettre le passage des pinces des véhicules et à la fois conserver leur fonction de déviation du câble tracteur.

Par ailleurs, certaines installations de transport par câble tracteur aérien comportent des systèmes pour prendre des virages à gauche comme à droite, par rapport à la direction de circulation des véhicules tractés. Mais ces systèmes sont beaucoup plus complexes à mettre en œuvre du fait de la difficulté du franchissement des pinces en combinaison avec les galets de guidage du câble tracteur.

Les virages sont généralement effectués grâce à une gare intermédiaire, dite d'angle, située entre les deux gares d'extrémités, et où les véhicules sont débrayés du câble tracteur. Mais cette configuration impose d'avoir une gare intermédiaire à chaque virage de l'installation.

On peut citer la demande de brevet français FR2496029 qui divulgue un transporteur aérien sur câble, présentant une courbe, le câble étant guidé dans la courbe par des éléments de guidage disposés du côté interne de la courbe, et dans lequel les véhicules tractés sont équipés d'une suspente s'étendant d'un même côté du câble extérieur à la courbe pour que les éléments de guidage ne gênent pas le passage des suspentes. Le transporteur comporte en outre un dispositif de transfert, situé dans une gare d'embarquement et/ou de débarquement de l'installation, pour prendre en charge les véhicules débrayés du câble et pour les présenter sur le câble à embrayer dans une position où la suspente est située à l'extérieur de la courbe. Mais le dispositif de transfert est complexe pour inverser la position des véhicules, et par ailleurs, ces véhicules doivent comporter une cabine, ou un siège, qui puisse tourner autour de la suspente afin de pouvoir placer l'entrée du véhicule du bon côté de la zone d'embarquement et/ou de débarquement.

On peut citer la demande internationale WO2011/045808 qui divulgue une installation de transport par câble tracteur aérien, comprenant un véhicule muni d'une pince débrayable configurée pour accoupler le véhicule au câble tracteur aérien de façon amovible. Le véhicule étant pourvu d'un mécanisme d'ouverture/fermeture de la pince situé à la verticale de la pince pour permettre au véhicule de prendre un virage, c'est-à-dire une déviation horizontale. Mais le mécanisme d'ouverture/fermeture est encombrant et empêche le véhicule de passer sous des pylônes de compression, c'est-à-dire où le câble subit une déviation verticale, ce qui réduit la capacité de franchissement du véhicule.

On peut en outre citer la demande de brevet américain US2015/0083016 qui divulgue une installation de transport par câble tracteur aérien, comprenant deux câbles porteurs pour transporter les véhicules entre deux gares d'extrémité, un câble tracteur pour tracter les véhicules, et un pylône supportant les câbles porteurs et où les câbles porteurs ont une trajectoire courbe. Par ailleurs, l'ouvrage comporte plusieurs galets de support pour guider le câble tracteur au sein du pylône. Dans cette installation, un galet de support est monté à pivotement en hauteur et sa position est ajustée sous l'action d'une force d'ajustement exercée par un ressort de rappel, un moteur, ou un poids. L'axe de rotation du galet a une inclinaison faible par rapport à l'horizontale pour permettre de courber le câble tracteur au sein du pylône tout en conservant la fonction du galet qui est de supporter le câble. En d'autres termes, lorsque le véhicule est situé en ligne avant le pylône, le câble tracteur est situé dans une gorge du galet et il exerce une pression sur le galet, et lorsque le véhicule franchit le pylône, le chariot du véhicule soulève le câble tracteur qui n'est plus en contact avec le galet, et la force d'ajustement rapproche le galet du chariot de sorte que le câble puisse reprendre sa place dans la gorge après le passage du véhicule. Mais l'inclinaison faible des galets de support ne permet pas de courber davantage le câble tracteur et impose une très grande longueur du pylône afin d'obtenir des angles de changement de direction plus importants.

On peut encore citer la demande de brevet allemand DE19704825A1 qui divulgue un téléphérique comprenant un pylône sur lequel un rouleau de poussée est monté coulissant entre une première position où il est en contact avec le câble et une deuxième position où il est éloigné du câble, et un moteur pour déplacer le rouleau de poussée. Mais le moteur nécessite une énergie qui doit être amenée au niveau du pylône.

### Objet de l'invention

Un objet de l'invention consiste à pallier ces inconvénients, et plus particulièrement à fournir une installation de transport par câble tracteur aérien adaptée à tout type de pince pour accrocher les véhicules, c'est-à-dire qui puisse être indépendante de l'encombrement latéral et/ou vertical des pinces.

Un autre objet de l'invention consiste à fournir une installation qui permette aux véhicules tractés de prendre des virages.

Selon un aspect de l'invention, il est proposé une installation de transport par câble, comprenant
un câble tracteur aérien,
un véhicule comprenant un dispositif d'accrochage pour accrocher le véhicule au câble tracteur,
un ouvrage sur lequel au moins un galet est monté mobile entre une première position dans laquelle le galet est en contact avec le câble tracteur et une deuxième position dans laquelle le galet est éloigné du câble tracteur, et
au moins un dispositif d'actionnement couplé audit au moins un galet et configuré pour exercer une première force sur le galet afin de déplacer le galet dans la première position, et
pour exercer une deuxième force sur le galet afin de déplacer le galet dans la deuxième position.

Ainsi, on peut dégager les galets au passage des pinces des véhicules lors du franchissement de l'ouvrage. On maîtrise alors le moment où on éloigne le galet du câble tracteur. Avantageusement on éloigne le galet avant que la pince ne touche le galet. Lors du franchissement de l'ouvrage par le véhicule, la pince n'est plus gênée par les galets de déviation, et on peut laisser passer tout type de pince, quel que soit son encombrement. Selon encore un autre avantage on peut courber le câble tracteur selon tous les types de courbures, verticales ou horizontales, ce qui offre la possibilité aux véhicules de prendre des virages à gauche comme à droite. Ledit au moins un dispositif d'actionnement comporte également un système de blocage configuré pour occuper un état verrouillé fournissant un appui rigide du câble tracteur sur le galet associé occupant la première position, et un état déverrouillé dans lequel le système de blocage est mobile pour permettre au galet associé d'occuper la deuxième position. Selon l'invention ledit au moins un dispositif d'actionnement comporte un corps et le système de blocage forme une articulation à genouillère reliant le galet au corps. Ainsi, on peut fournir un appui rigide pour le câble tracteur ce qui sécurise le déplacement du câble lors de l'exploitation de l'installation.

Le véhicule peut comprendre un dispositif de commande configuré pour commander ledit au moins un dispositif d'actionnement afin de déplacer le galet. On facilite ainsi la synchronisation entre le passage du véhicule au sein de l'ouvrage et le déplacement des galets.

Selon un mode de réalisation, le dispositif de commande est configuré pour commander à distance ledit au moins un dispositif d'actionnement afin de déplacer le galet.

Selon un autre mode de réalisation, le dispositif de commande est un déclencheur configuré pour commander ledit au moins un dispositif d'actionnement lorsque le déclencheur est au contact dudit au moins un dispositif d'actionnement.

Selon un mode de réalisation, ledit au moins un dispositif d'actionnement comporte un actionneur monté mobile entre une position déployée dans laquelle le galet occupe sa première position et une position rétractée dans laquelle le galet occupe sa deuxième position, l'actionneur étant pourvu d'une roulette et le déclencheur comporte un premier rail contre lequel roule la roulette pour amener l'actionneur dans sa position rétractée afin d'exercer la deuxième force, et un deuxième rail contre lequel roule la roulette pour amener l'actionneur dans sa position déployée afin d'exercer la première force.

Selon un autre mode de réalisation, ledit au moins un dispositif d'actionnement comporte un actionneur monté mobile entre une position déployée dans laquelle le galet occupe sa première position et une position rétractée dans laquelle le galet occupe sa deuxième position, l'actionneur étant pourvu de première et deuxième roulettes et le déclencheur comporte un premier rail contre lequel roule la première roulette pour amener l'actionneur dans sa position rétractée afin d'exercer la deuxième force, et un deuxième rail contre lequel roule la deuxième roulette pour amener l'actionneur dans sa position déployée afin d'exercer la première force.

Ledit au moins un dispositif d'actionnement peut comporter un organe de rappel configuré pour permettre au galet d'occuper la deuxième position, et pour exercer la première force sur le galet.

Le déclencheur peut comporter un premier contre-rail formant, avec le premier rail, un guide pour la première roulette, un deuxième contre-rail formant, avec le deuxième rail, un guide pour la deuxième roulette, et un rail intermédiaire reliant les premier et deuxième rails, ledit au moins un dispositif d'actionnement comportant un organe de maintien pour maintenir les première et deuxième roulettes en appui contre le rail intermédiaire.

Selon un autre avantage, le véhicule comporte un moyen de roulement et l'ouvrage comprend une structure de guidage configurée pour recevoir le moyen de roulement afin que le véhicule puisse rouler sur la structure de guidage.

On peut donc stabiliser le véhicule par rapport au câble tracteur lors de l'éloignement des galets de l'ouvrage.

Ledit au moins un galet peut être monté mobile en rotation autour d'un axe de rotation vertical.

Cette configuration permet aux véhicules de prendre des virages en déviant horizontalement le câble tracteur.

L'installation peut comprendre plusieurs galets montés successivement sur l'ouvrage le long d'une courbe afin de dévier le câble tracteur entre deux extrémités de l'ouvrage, et comprendre plusieurs dispositifs d'actionnement couplés respectivement aux galets.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1, illustre schématiquement une vue de dessus d'un mode de réalisation d'une installation de transport par câble selon l'invention ;
- les figures 2 à 5, illustrent schématiquement des vues de dessus de différents modes de réalisation du dispositif de commande et du dispositif d'actionnement ;
- la figure 6, illustre schématiquement une vue de dessus d'un ouvrage de l'installation où un véhicule franchit l'ouvrage ;
- la figure 7, illustre de façon schématique une vue en face avant d'un mode de réalisation d'un dispositif d'actionnement dans lequel un galet occupe la première position ; et
- les figures 8 et 9, illustrent de façon schématique deux vues en face avant du dispositif d'actionnement de la figure 7 dans lequel le galet occupe la deuxième position.

### Description détaillée

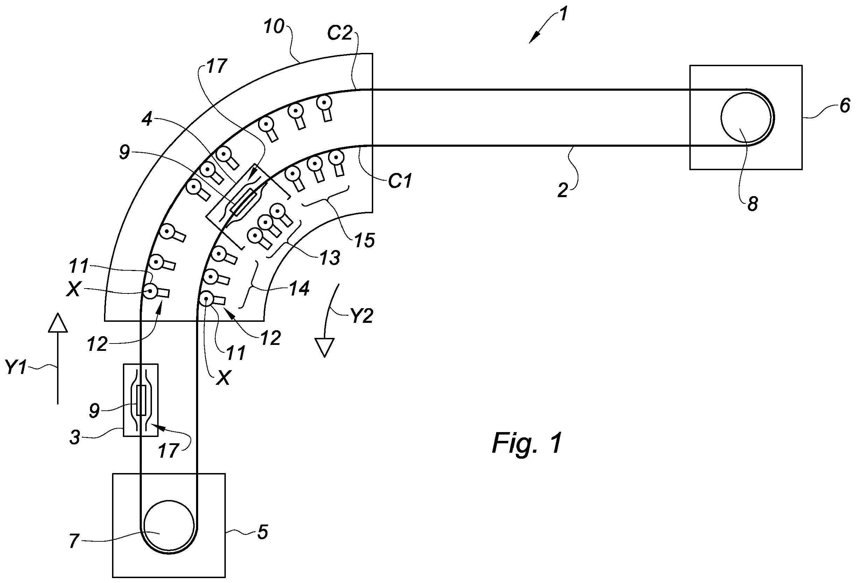

Sur la figure 1, on a représenté un mode de réalisation d'une installation 1 de transport par câble 2. L'installation 1 comporte un câble tracteur aérien 2, au moins un véhicule 3, 4 destiné à être tracté par le câble 2 pour le transport de personnes, ou de marchandises. L'installation 1 peut être de tout type, par exemple du type monocâble, comme illustré sur la figure 1, ou bicâble, à pinces fixes ou débrayable, à câble continu ou va et vient. Une installation monocâble comporte un seul câble qui est à la fois porteur et tracteur, une installation bicâble comporte au moins un câble tracteur et au moins un câble porteur. Une installation à pinces fixes comprend des véhicules qui sont accrochés de manière permanente au câble tracteur, une installation débrayable comporte des véhicules accrochés de manière amovible au câble tracteur. Une installation à câble continu comporte un câble tracteur qui décrit une boucle fermée entre deux gares d'extrémité de l'installation et les véhicules circulent en continu le long du câble tracteur. Une installation va et vient comporte un véhicule qui effectue un aller-retour entre deux gares d'extrémité selon une même voie. Sur la figure 1, on a représenté une installation 1 monocâble débrayable à câble 2 continu. L'installation 1 comporte deux gares d'extrémité 5, 6 pour le débarquement/embarquement des personnes dans les véhicules 3, 4. En outre, l'installation 1 comporte une gare motrice 5 munie d'un moteur pour entraîner une poulie motrice 7 afin de déplacer le câble tracteur 2. L'installation 1 comporte également une gare de renvoi 6 comprenant une poulie de renvoi 8 pour la mise en tension du câble tracteur 2. Par ailleurs, les véhicules 3, 4 sont accouplés au câble tracteur 2 et maintenus au-dessus du sol, on dit alors que le câble tracteur 2 est aérien et l'installation 1 de transport est un téléphérique.

Chaque véhicule 3, 4 comporte une cabine pouvant être un habitacle destiné à recevoir des passagers ou un container destiné à contenir des marchandises, par exemple des déchets, et l'installation est du type télécabine. Chaque véhicule 3, 4 peut également comprendre des sièges, notamment sans parois, et l'installation est du type télésiège. Chaque véhicule 3, 4 de l'installation 1 comporte un dispositif d'accrochage 9 pour accrocher le véhicule 3, 4 au câble tracteur 2. Le dispositif d'accrochage 9 peut être une pince fixe ou débrayable.

L'installation 1 comporte également un, ou plusieurs, ouvrage 10 où circule le câble tracteur. L'ouvrage 10 est une structure verticale servant au maintien du câble tracteur 2. L'ouvrage 10 peut-être un pylône de ligne, c'est-à-dire un pylône situé entre les deux gares d'extrémité 5, 6. Un pylône de ligne peut servir au support, à la compression, ou à la déviation horizontale du câble tracteur. Un ouvrage 10 peut également être une structure porteuse interne située au sein d'une gare d'extrémité 5, 6 ou d'une gare intermédiaire. Sur la figure 1 on a représenté un ouvrage 10 de prise d'angle, noté également pylône de déviation horizontale, pour réaliser un virage de l'installation 1. On a également représenté un exemple de cheminement d'un premier véhicule 3 circulant vers la gare de renvoi 6, selon le sens représenté par la référence Y1, et le cheminement du deuxième véhicule 4 circulant en sens inverse Y2 vers la gare motrice 5.

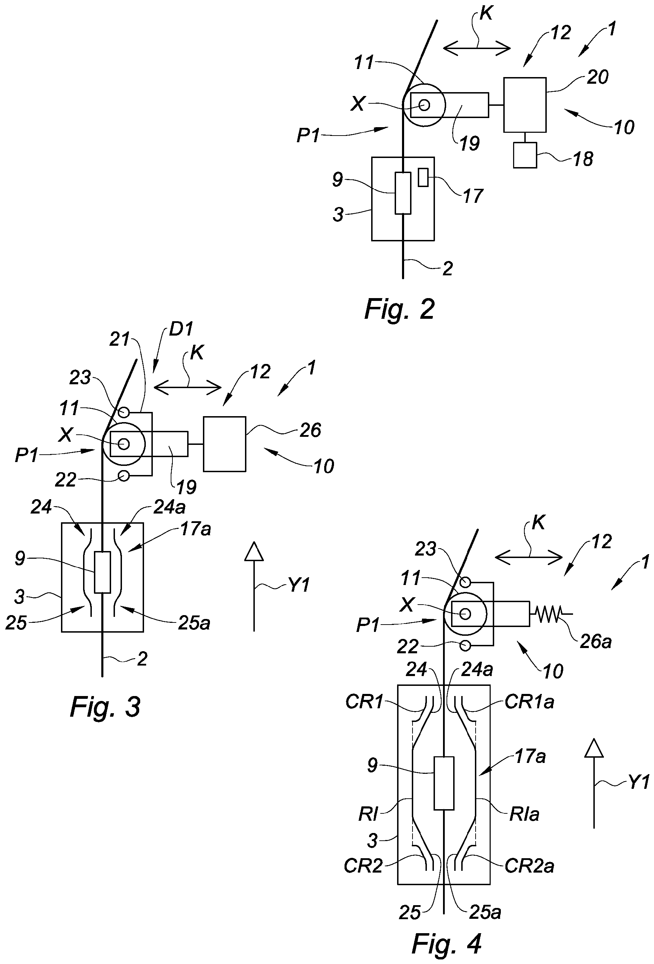

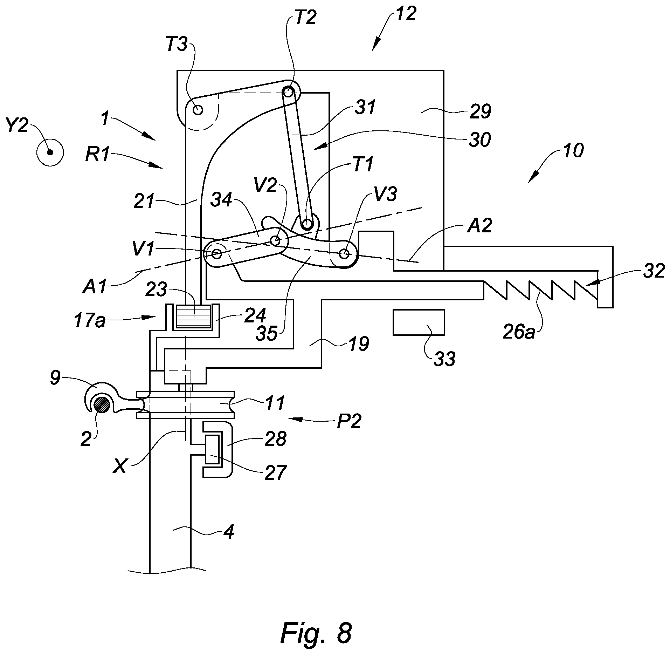

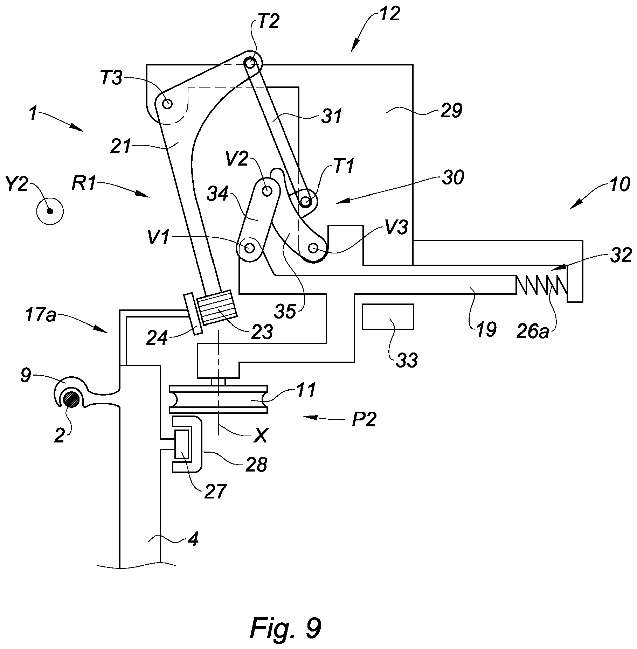

De manière générale l'ouvrage 10 comporte au moins un galet 11 monté mobile. Un galet est une petite roue munie d'une gorge destinée à recevoir le câble tracteur 2. Le galet 11 est monté mobile en rotation autour d'un axe de rotation principal X. L'axe de rotation principal X peut être vertical, c'est-à-dire que le galet 11 est un galet de déviation horizontale, et il permet au véhicule de prendre un virage à gauche ou à droite. L'axe de rotation principal X peut également être horizontal, c'est-à-dire que le galet 11 est un galet de compression ou de support, et le véhicule peut monter ou descendre. De préférence, l'ouvrage 10 comporte plusieurs galets 11 montés successivement sur l'ouvrage 10 le long d'une courbe C1, C2, afin de dévier le câble 2 situé entre deux extrémités de l'ouvrage 10 et selon la courbe C1, C2. Par exemple, on a représenté dix-huit galets sur la figure 1, en particulier ces galets 11 sont dits de déviation car leurs axes de rotation principaux X sont verticaux et ils permettent au câble tracteur 2 d'être courbé horizontalement au sein de l'ouvrage 10. La courbure est obtenue par une déviation du câble 2 qui suit la disposition des galets 11 le long de la courbe C1, C2. En outre, au moins un galet 11 est monté mobile entre une première position P1 dans laquelle le galet 11 est en contact avec le câble tracteur 2, comme illustrée sur les figures 2 à 5 et 7, et une deuxième position P2 dans laquelle le galet 11 est éloigné du câble tracteur 2, comme illustrée sur les figures 8 et 9. On entend par « éloigné du câble tracteur 2 », le fait que le galet 10 n'est pas en contact avec le câble tracteur 2. Pour passer de la première position P1 à la deuxième position P2, le galet 11 peut être monté mobile en translation le long d'un axe de translation perpendiculaire à un axe longitudinal du câble 2. En variante, le galet 11 est monté sur un bras qui est monté à rotation selon un axe de rotation additionnel orienté de manière à pouvoir éloigner le galet 11 du câble 2.

Afin de pouvoir déplacer les galets 11 dans les premières ou deuxièmes positions P1, P2, l'installation 1 comporte au moins un dispositif d'actionnement 12 couplé à au moins un galet 11 associé monté mobile. De préférence, l'installation 1 comporte plusieurs dispositifs d'actionnement 12 couplés respectivement à plusieurs galets. En d'autres termes, chaque galet 11 de l'ouvrage 10 est associé à un dispositif d'actionnement 12 qui manœuvre le galet 11 vers la première ou la deuxième position P1, P2. Plus particulièrement, chaque dispositif d'actionnement 12 est configuré pour exercer une première force sur le galet 11 associé afin de le déplacer dans la première position P1, et pour exercer une deuxième force sur le galet 11 associé afin de le déplacer dans la deuxième position P2.

Le principe général de fonctionnement de l'installation 1 est que lorsqu'aucun véhicule ne franchit l'ouvrage 10, les galets de l'ouvrage 10 occupent leur première position P1. Puis, lorsqu'un véhicule 4 est en cours de franchissement de l'ouvrage 10, les dispositifs d'actionnement 12 associés aux galets 11 d'un groupe 13 exercent une deuxième force sur les galets 11 du groupe 13 pour les déplacer vers leur deuxième position P2. Ainsi, on crée un espace libre entre le câble tracteur 2 et le galet 11 déplacé dans sa deuxième position P2, ce qui facilite le passage de la pince 9 au niveau des galets 11 lors du franchissement de l'ouvrage 10. Lorsque le véhicule 4 a franchi le groupe 13 de galets 11, les dispositifs d'actionnement 12 exercent la première force sur les galets 11 du groupe 13 pour les ramener dans leurs premières positions P1. On peut donc éloigner les galets 11 du câble tracteur 2 au passage du véhicule 3, 4 qui franchit l'ouvrage 10. Avantageusement, on éloigne les galets 11 situés au niveau de la pince 9 du véhicule 3, 4 lorsque ce dernier franchit l'ouvrage 10. Sur la figure 1 on a représenté un premier groupe 14 de galets initialement dans la première position P1 où ils sont en contact avec le câble tracteur 2. Les galets 11 du premier groupe 14 n'ont pas encore été franchis et leur position initiale correspond donc à la première position P1. Le deuxième groupe 13 correspond aux galets 11 occupant leur deuxième position P2 où ils sont éloignés du câble 2. On a également représenté un troisième groupe 15 pour lequel les galets 11 ont été ramenés dans leur première position P1 après passage du véhicule 4.

Avantageusement, afin de pouvoir synchroniser le déplacement des galets 11 avec le passage de la pince 9, les véhicules 3, 4 peuvent comporter un dispositif de commande 17, 17a configuré pour commander au moins un dispositif d'actionnement 12 afin de déplacer le galet 11 associé.

Le dispositif de commande 17, 17a peut être de différents types, par exemple du type électronique ou du type mécanique. On peut également envisager qu'une gare 5, 6 de l'installation dispose d'un dispositif de commande du type électronique 17 configuré pour commander à distance les dispositifs d'actionnement 12 lors du passage des véhicules au niveau des galets 11 des ouvrages 10. De façon générale, le dispositif d'actionnement 12 comporte un bras porte-galet 19 sur lequel le galet 11 associé est monté mobile en rotation autour de son axe principal X. Sur la figure 2, on a représenté un mode de réalisation dans lequel le dispositif de commande 17, 17a est du type électronique. Selon ce mode de réalisation, l'installation 1 comporte un moteur 20 pour déplacer le bras et donc le galet 11. Par exemple, le dispositif de commande électronique 17 comprend une unité d'émission d'un signal de commande à destination d'une unité de réception 18 apte à détecter le signal émis pour commander le dispositif d'actionnement 12 afin que celui-ci exerce la première ou la deuxième force sur le galet 11 associé pour le déplacer. Les directions de déplacement des galets 11 sont représentées par la référence K. Le signal de commande est préférentiellement émis lorsque le véhicule 3 approche de l'ouvrage 10 et le galet 11 est alors déplacé dans sa deuxième position P2 avant que la pince 9 ne vienne en contact du galet 11. Par ailleurs après le passage de la pince 9, l'unité d'émission émet un deuxième signal de commande, dit de fermeture, à destination de l'unité de réception 18. L'unité de réception 18 peut alors commander le dispositif d'actionnement 12 pour exercer la première force afin de ramener le galet 11 associé dans sa première position P1 en contact avec le câble tracteur 2. En variante, le dispositif de commande électronique 17 comporte une balise de type radiofréquence qui peut être détectée par un émetteur/récepteur radiofréquence situé sur l'ouvrage 10. Dans cette variante, l'émetteur/récepteur commande le dispositif d'actionnement 12 pour déplacer le galet 11 dans la deuxième position P2 lorsque l'émetteur/récepteur détecte la balise du véhicule 4, et commande le dispositif d'actionnement 12 afin de déplacer le galet 11 dans la première position P1 lorsque l'émetteur/récepteur ne détecte plus la balise du véhicule 4, c'est-à-dire lorsque la pince 9 du véhicule a franchi le galet 11 de l'ouvrage 10.

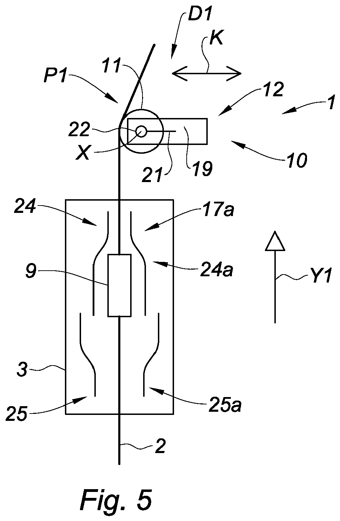

Sur les figures 3 à 5, on a représenté d'autres modes de réalisation dans lesquels le dispositif de commande 17, 17a est du type mécanique. De façon générale, lorsque le dispositif de commande 17, 17a est du type mécanique, il est un déclencheur 17a configuré pour commander les dispositifs d'actionnement 12 lorsque le déclencheur 17a est au contact des dispositifs d'actionnement 12. Un tel dispositif de commande 17a du type mécanique permet d'améliorer la synchronisation entre le franchissement de la pince 9 et l'éloignement des galets 11 vis-à-vis du câble tracteur 2. Le dispositif d'actionnement 12 comporte le bras porte-galet 19 mobile, et un actionneur 21 monté également mobile entre une position déployée D1, illustrées aux figures 3 à 5 et 7, dans laquelle le galet 11 occupe sa première position P1, et une position rétractée R1, illustrée aux figures 8 et 9, dans laquelle le galet 11 occupe sa deuxième position P2. L'actionneur 21 comporte en outre des première et deuxième roulettes 22, 23, notées respectivement roulettes d'entrée et de sortie. La roulette d'entrée 22 est la première roulette qui vient au contact du déclencheur 17a lorsque le véhicule franchit l'ouvrage 10, et la roulette de sortie 23 est la dernière roulette qui vient au contact du déclencheur 17a pour ramener le galet 11 dans la première position P1. En variante, l'actionneur 21 comporte une seule roulette 22 comme illustré sur la figure 5. Les deux roulettes 22, 23 permettent de réduire la longueur du déclencheur 17a des véhicules 3, 4. Par ailleurs, le déclencheur 17a comporte au moins un premier rail 24, 24a contre lequel roule la première roulette 22 pour amener l'actionneur 21 dans sa position rétractée R1 afin d'exercer la deuxième force pour déplacer le galet 11 dans sa deuxième position P2. le déclencheur 17a comporte en outre au moins un deuxième rail 25, 25a contre lequel roule la deuxième roulette 23 pour amener l'actionneur 21 dans sa position déployée D1 afin d'exercer la première force pour déplacer le galet 11 dans sa première position P1. Sur les figures 3 à 5, le véhicule 3 comprend deux premiers rails 24, 24a, en particulier un premier rail gauche 24 et un premier rail droit 24a situés de part et d'autre de la pince 9. Le véhicule 3 comporte également deux deuxièmes rails 25, 25a, un deuxième rail gauche 25 et un deuxième rail droit 25a situés également de part et d'autre de la pince 9. Les rails 24, 24a et 25, 25a peuvent être positionnés de façon symétrique par rapport à la pince 9 de façon à pouvoir prendre des virages à droite et à gauche, et pour circuler dans les deux sens Y1, Y2 de circulation du câble tracteur 2. En outre, les premiers rails 24, 24a sont préférentiellement deux rails de guidage incurvés, notamment concave vers l'extérieur du véhicule 3, pour déplacer la première roulette 22, et donc l'actionneur 21, dans la position rétractée R1. Les deuxièmes rails 25, 25a sont également deux rails de guidage incurvés, notamment concave vers l'extérieur du véhicule 3, pour autoriser la deuxième roulette 23, et donc l'actionneur 21, à revenir dans la position déployée D1.

Dans les modes de réalisation illustrés aux figures 3 et 4, les premier et deuxième rails gauches 24, 25 sont contigus et forment un seul rail, noté rail gauche. Le rail gauche 24, 25 comporte alors un rail intermédiaire RI reliant les premier et deuxième rails gauches 24, 25. Lorsque les rails 24, 24a et 25, 25a sont positionnés de façon symétrique, les premier et deuxième rails droits 24a, 25a sont également contigus et forment un seul rail, noté rail droit. Le rail droit 24a, 25a comporte alors un rail intermédiaire RIa reliant les premier et deuxième rails droits 24a, 25a. Dans ce cas, les premières et deuxième roulettes 22, 23 peuvent rouler contre le rail intermédiaire RI, RIa.

Selon le mode de réalisation illustré à la figure 3, le dispositif d'actionnement 12 comporte en outre un organe de rappel 26 configuré pour maintenir la deuxième roulette 23 en appui contre le deuxième rail 25a. L'organe de rappel 26 est configuré pour permettre au galet 11 associé d'occuper la deuxième position P2, et pour exercer la première force sur le galet 11 pour le ramener dans la première position P1. Le maintien en appui permet à la deuxième roulette 23 de suivre la forme incurvée du deuxième rail 25, 25a et ramener l'actionneur 21 dans sa position déployée D1 après passage de la pince 9. L'organe de rappel 26 peut être un organe élastique tel un ressort, ou un organe motorisé, par exemple un moteur électrique, pneumatique, hydraulique ou à combustion interne.

Selon le mode de réalisation illustré à la figure 4, le déclencheur 17a comporte au moins un premier contre-rail CR1, CR1a formant, avec le premier rail 24, 24a, un guide pour la première roulette 22, et au moins un deuxième contre-rail CR2, CR2a formant, avec le deuxième rail 25, 25a, un guide pour la deuxième roulette 23. Dans ce mode de réalisation, le dispositif d'actionnement 12 comporte un organe de maintien 26a configuré pour maintenir les première et deuxième roulettes 22, 23 en appui contre le rail intermédiaire RI, RIa. Dans cette configuration, lorsque le véhicule 3 franchit l'ouvrage 10, le véhicule 3 se déplace dans le sens Y1. La première roulette 22 entre dans le guide formé par le premier rail 24a et le premier contre-rail CR1a, et l'actionneur 21 est déplacé vers sa position rétractée R1. Ainsi, le galet 11 est amené dans sa deuxième position P2. Puis, la première roulette 23 sort du guide, et les première et deuxième roulettes 22, 23 suivent le rail intermédiaire RIa en étant maintenues en appui contre le rail intermédiaire RIa par l'intermédiaire de l'organe de maintien 26a. La première roulette 22 passe devant l'entrée du deuxième guide formé par le deuxième contre-rail CR2a et le deuxième rail 25a, et n'entre pas dans le deuxième guide tant que la deuxième roulette 23 est en appui contre le rail intermédiaire RIa. Puis, la deuxième roulette 23 entre dans le deuxième guide, et le deuxième guide amène l'actionneur 21 dans sa position déployée D1, ce qui ramène le galet 11 dans sa première position P1. On peut noter que l'organe de maintien 26a est différent de l'organe de rappel 26 décrit ci-avant. En effet, l'organe de maintien 26a fournit seulement un effort pour maintenir les roulettes 22, 23 contre le rail intermédiaire RI, RIa, et c'est le deuxième guide qui fournit un effort pour ramener l'actionneur 21 dans la position déployée D1. Au contraire, dans le mode de réalisation illustré à la figure 3, c'est l'organe de rappel 26 qui fournit un effort pour ramener l'actionneur 21 dans la position déployée D1. Ainsi, on peut utiliser un organe de maintien 26a configuré pour fournir une force de maintien inférieure à la force de rappel fournie par l'organe de rappel 26.

Sur la figure 5, on a représenté un mode de réalisation dans lequel le premier rail 24, 24a n'est pas contigu avec le deuxième rail 25, 25a. De préférence, le dispositif d'actionnement 12 comporte une seule roulette 22. Dans ce mode de réalisation, il n'est pas nécessaire que le dispositif d'actionnement 12 comporte un organe de rappel 26. Dans ce cas, le déclencheur 17a comporte un deuxième rail 25, 25a qui permet de ramener l'actionneur 21 dans la position déployée D1. Le deuxième rail 25, 25a est espacé par rapport au premier rail 24, 24a et l'espacement créé permet le passage de la roulette 22 qui va suivre la courbure intérieure du deuxième rail 25, 25a, pour que l'actionneur 21 retourne dans sa position déployée D1.

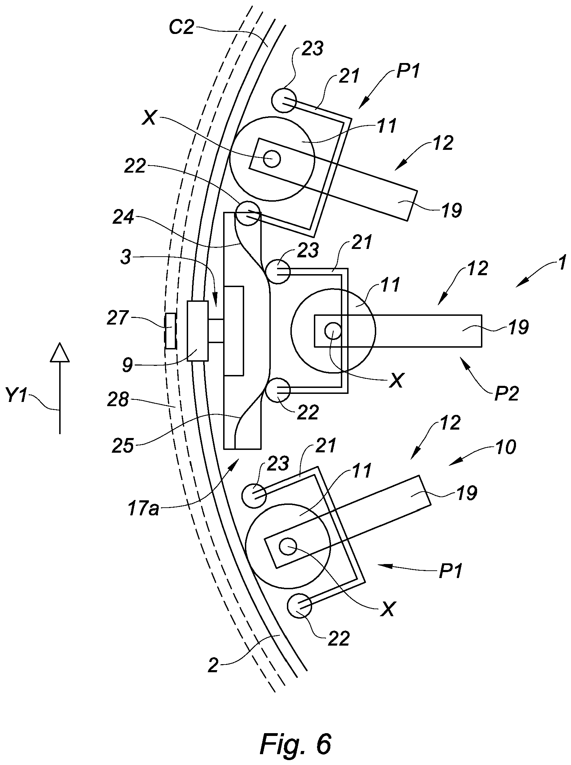

Sur la figure 6, on a représenté un autre mode de réalisation d'une installation 1 dans laquelle le dispositif de commande 17, 17a est également du type mécanique. Dans cet autre mode de réalisation, le véhicule 3 comporte un moyen de roulement 27 et l'ouvrage 10 comprend une structure de guidage 28 configurée pour recevoir le moyen de roulement 27 afin que le véhicule 3 puisse rouler sur la structure de guidage 28. En particulier, la structure de guidage s'étend le long de la courbure C2 du câble tracteur 2. Sur la figure 6, le galet 11 situé au milieu des deux autres galets 11, est dans sa deuxième position P2. Les roulettes 22, 23 du dispositif d'actionnement 12 associé roulent en appui contre le déclencheur 17a du véhicule 3, 4. Les autres galets 11 sont dans leur première position P1. La structure de guidage 28 permet à la pince 9 du véhicule 3 de tenir le câble tracteur 2 lors du déplacement des galets 11 dans leur deuxième position P2.

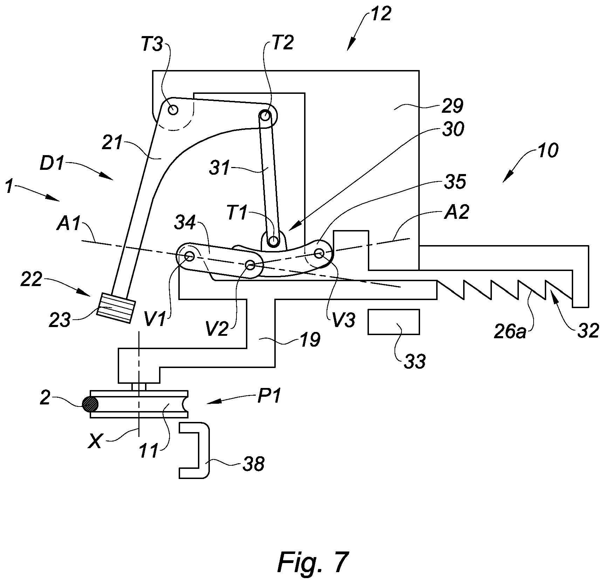

Sur les figures 7 à 9, on a représenté une variante de l'installation 1 dans laquelle le dispositif de commande 17, 17a est aussi du type mécanique. Le dispositif d'actionnement 12 comporte un corps 29 et un système de blocage 30. Le système de blocage 30 est configuré pour occuper un état verrouillé fournissant un appui rigide du câble tracteur 2 sur le galet 11 associé occupant la première position P1, et un état déverrouillé dans lequel le système de blocage 30 est mobile pour permettre au galet 11 associé d'occuper la deuxième position P2. Plus particulièrement, dans l'état verrouillé, le système de blocage 30 bloque le galet 11 dans la première position P1 afin de fournir un appui rigide. Par exemple, le système de blocage 30 forme une articulation à genouillère reliant le galet 11 au corps 29. Une articulation à genouillère comporte deux bielles articulées permettant de passer d'un état à l'autre en exerçant deux forces distinctes sur les bielles articulées. Un tel système de blocage 30 est différent d'un système élastique. En effet, un système élastique fournit une force de rappel qui tend à ramener une pièce dans sa position initiale après que la pièce a été déplacée. Pour un système élastique, on ne fournit qu'une seule force pour plier, tendre, comprimer ou tordre un organe élastique, et c'est l'organe élastique qui fournit la force de rappel. Au contraire, dans le cas du système de blocage 30, c'est le dispositif d'actionnement 12 qui fournit les deux forces pour verrouiller ou déverrouiller le système de blocage 30.

Selon la variante illustrée aux figures 7 à 9, le corps 29 est monté fixe sur l'ouvrage 10. Le dispositif d'actionnement 12 comporte le bras porte-galet 19 mobile, l'actionneur 21 monté mobile entre la position déployée D1 et la position rétractée R1, et un levier 31 reliant le système de blocage 30 avec l'actionneur 21 par deux liaisons pivot T1, T2 respectivement. L'actionneur 21 comporte les première et deuxième roulettes 22, 23, et il est monté sur le corps 29 par une liaison pivot T3. Le bras porte-galet 19 est monté coulissant au sein d'un logement 32 formé dans le corps 29 du dispositif d'actionnement 12. Le bras porte-galet 19 peut donc occuper une position de blocage dans laquelle le galet 11 occupe sa première position P1, et une position débloquée dans laquelle le galet 11 est éloigné du câble tracteur 2 et le galet 11 peut occuper sa deuxième position P2, et inversement. Le système de blocage 30 comporte, de préférence, deux bielles 34, 35 articulées. Une première bielle 34 est montée sur une partie du bras porte-galet 19, par une première liaison pivot V1, et sur la deuxième bielle 35, par une deuxième liaison pivot V2. La deuxième bielle 35 est, quant à elle, montée sur le corps 29 du dispositif d'actionnement 12 par une troisième liaison pivot V3. En particulier, la première bielle 34 comporte un premier axe A1 passant par les première et deuxième liaisons pivots V1, V2, et la deuxième bielle 35 comporte un deuxième axe A2 passant par les deuxième et troisième liaisons pivot V2, V3. Lorsque le système de blocage 30 occupe son état verrouillé, comme illustré sur la figure 7, le premier axe A1 forme un premier angle avec le deuxième axe A2, et les bielles 34, 35 sont bloquées en butée. Cette configuration permet de fournir un appui rigide du câble tracteur 2 sur le galet 11. Lorsque le système de blocage 34 occupe son état déverrouillé, comme illustré aux figures 8 et 9, le premier axe A1 forme un deuxième angle, différent du premier angle, avec le deuxième axe A2, et les bielles 34, 35 sont mobiles. Dans cette configuration, le bras porte-galet 19 peut coulisser dans le logement 32 et le galet 11 peut occuper sa deuxième position P2. On passe d'un état à l'autre, en d'autres termes on déverrouille le système de blocage 30, en passant un point d'alignement pour lequel les premier et deuxième axes A1, A2 sont alignés. Le passage du point d'alignement est permis grâce à l'élasticité du câble tracteur 2.

Sur la figure 7, on a représenté un galet 11 occupant sa première position P1, c'est-à-dire une position en contact avec le câble tracteur 2. Dans cette configuration, le système de blocage 30 est dans son état verrouillé. Sur la figure 8, on a représenté un véhicule 3, 4 en cours de franchissement de l'ouvrage 10. En outre, le déclencheur 17a du véhicule 3, 4 est en contact avec le dispositif d'actionnement 12 pour commander le déplacement du galet 11 dans sa deuxième position P2. Le système de blocage 30 est dans un état déverrouillé initial où le galet 11 est éloigné du câble tracteur 2 et où les bielles 34, 35 ont passé le point d'alignement. On dit également que le galet 11 occupe une deuxième position P2 initiale. Sur la figure 9, on a représenté un véhicule 3, 4 franchissant l'ouvrage 10, et l'actionneur 21 dans sa position rétractée R1. Lorsque le système de blocage 30 est dans l'état déverrouillé initial, les bielles 34, 35 sont mobiles, et le déclencheur 17a peut déplacer la première roulette 22 en l'éloignant du câble tracteur 2, ce qui a pour effet d'éloigner l'actionneur 21 vers sa position rétractée R1. En déplaçant l'actionneur 21, celui-ci transmet la deuxième force, générée par le déclencheur 17a, pour déplacer les bielles 34, 35 et pour déplacer le porte-galet 19 jusqu'à une position débloquée de butée. La position débloquée de butée correspond à la position dans laquelle le bras porte-galet 19 est en appui contre une butée 33 prévue sur le corps 29 du dispositif d'alignement 12. Lorsque le porte-galet 19 atteint sa position débloquée de butée, le galet 11 occupe une position la plus éloignée du câble tracteur 2, notée également deuxième position P2 de butée.

En d'autres termes, lorsque le premier rail 24, 24a vient au contact de la première roulette 22, la première roulette 22 prend appui contre le premier rail 24 et suit la forme incurvée du premier rail 24, ce qui permet de décaler la première roulette 22 en l'éloignant du câble tracteur 2. Lorsque la première roulette 22 est décalée, l'actionneur 21 et le levier 31 déplacent la deuxième bielle 35 pour déverrouiller le système de blocage 30. Plus particulièrement, lors du déverrouillage le galet 11 exerce une force sur le câble tracteur 2 ayant une direction opposée à celle du déplacement de l'actionneur 21, et, grâce notamment à l'élasticité du câble tracteur 2, le déverrouillage du système de blocage 30 et permis. Après le passage de la pince 9, la deuxième roulette 23 du dispositif d'actionnement 12 occupe à nouveau sa position initiale, ce qui a pour effet de ramener le galet 11 dans sa première position P1. Le dispositif d'actionnement 12 comporte préférentiellement l'organe de maintien 26a, qui est par exemple un ressort reliant le bras porte-galet 19 avec le corps 29 du dispositif d'actionnement 12. L'organe de maintien 26a autorise le bras porte-galet 19 de coulisser dans le logement 32 et génère un effort pour maintenir les roulettes 22, 23 de l'actionneur 21 en appui contre le rail intermédiaire RI, RIa. On peut noter que l'organe de maintien 26a ne participe pas à l'appui du câble tracteur 2 contre le galet 11 lorsque que le galet 11 occupe sa première position P1. Dans cette première position P1, l'organe de maintien 26a n'exerce pas de force sur le galet 11 puisque l'articulation à genouillère fournit un appui rigide.

L'invention qui vient d'être décrite ci-avant fournit une installation de transport par câble aérien qui permet de franchir des ouvrages quel que soit le type de pince. L'installation est particulièrement adaptée aux pinces ayant un encombrement latéral ou vertical. En outre, une telle installation permet aux véhicules de prendre des virages à gauche ou à droite, ce qui offre la possibilité de réaliser l'installation dans un environnement ayant une grande densité d'obstacles, notamment les environnements urbains. Par ailleurs, on peut s'affranchir d'implémenter des stations intermédiaires pour dévier les véhicules découplés du câble tracteur, qui sont encombrantes et qui complexifient le montage de l'installation.

## Revendications

1. Installation de transport par câble, comprenant
un câble tracteur aérien (2),
un véhicule (3, 4) comprenant un dispositif d'accrochage pour accrocher le véhicule au câble tracteur (2),
un ouvrage (10) sur lequel au moins un galet (11) est monté mobile entre une première position (P1) dans laquelle le galet (11) est en contact avec le câble tracteur (2) et une deuxième position (P2) dans laquelle le galet (11) est éloigné du câble tracteur (2), et
au moins un dispositif d'actionnement (12) couplé audit au moins un galet (11) et configuré pour exercer une première force sur le galet (11) afin de déplacer le galet (11) dans la première position (P1), et pour exercer une deuxième force sur le galet (11) afin de déplacer le galet (11) dans la deuxième position (P2), ledit au moins un dispositif d'actionnement (12) comportant un système de blocage (30) configuré pour occuper un état verrouillé fournissant un appui rigide du câble tracteur (2) sur le galet (11) associé occupant la première position (P1), et un état déverrouillé dans lequel le système de blocage (30) est mobile pour permettre au galet (11) associé d'occuper la deuxième position (P2),
**caractérisée en ce que** ledit au moins un dispositif d'actionnement (12) comporte un corps (29) et le système de blocage (30) forme une articulation à genouillère reliant le galet (11) au corps (29).

2. Installation selon la revendication 1, dans laquelle le véhicule (3, 4) comprend un dispositif de commande (17, 17a) configuré pour commander ledit au moins un dispositif d'actionnement (12) afin de déplacer le galet (11).

3. Installation selon la revendication 2, dans laquelle le dispositif de commande (17, 17a) est configuré pour commander à distance ledit au moins un dispositif d'actionnement (12) afin de déplacer le galet (11).

4. Installation selon la revendication 2, dans laquelle le dispositif de commande (17, 17a) est un déclencheur (17a) configuré pour commander ledit au moins un dispositif d'actionnement (12) lorsque le déclencheur (17a) est au contact dudit au moins un dispositif d'actionnement (12).

5. Installation selon la revendication 4, dans laquelle ledit au moins un dispositif d'actionnement (12) comporte un actionneur (21) monté mobile entre une position déployée (D1) dans laquelle le galet (11) occupe sa première position (P1) et une position rétractée (R1) dans laquelle le galet (11) occupe sa deuxième position (P2), l'actionneur (21) étant pourvu d'une roulette (22, 23) et le déclencheur (17a) comporte un premier rail (24, 24a) contre lequel roule la roulette (22, 23) pour amener l'actionneur (21) dans sa position rétractée (R1) afin d'exercer la deuxième force, et un deuxième rail (25, 25a) contre lequel roule la roulette (22, 23) pour amener l'actionneur (21) dans sa position déployée (D1) afin d'exercer la première force.

6. Installation selon la revendication 4, dans laquelle ledit au moins un dispositif d'actionnement (12) comporte un actionneur (21) monté mobile entre une position déployée (D1) dans laquelle le galet (11) occupe sa première position (P1) et une position rétractée (R1) dans laquelle le galet (11) occupe sa deuxième position (P2), l'actionneur (21) étant pourvu de première et deuxième roulettes (22, 23) et le déclencheur (17a) comporte un premier rail (24, 24a) contre lequel roule la première roulette (22) pour amener l'actionneur dans sa position rétractée (R1) afin d'exercer la deuxième force, et un deuxième rail (25, 25a) contre lequel roule la deuxième roulette (23) pour amener l'actionneur (21) dans sa position déployée (D1) afin d'exercer la première force.

7. Installation selon la revendication 5 ou 6, dans laquelle ledit au moins un dispositif d'actionnement (12) comporte un organe de rappel (26) configuré pour permettre au galet (11) d'occuper la deuxième position (P2), et pour exercer la première force sur le galet (11).

8. Installation selon la revendication 6, dans laquelle le déclencheur (17a) comporte un premier contre-rail (CR1, CR1a) formant, avec le premier rail (24, 24a), un guide pour la première roulette (22), un deuxième contre-rail (CR2, CR2a) formant, avec le deuxième rail (25, 25a), un guide pour la deuxième roulette (23), et un rail intermédiaire (RI, RIa) reliant les premier et deuxième rails (24, 25 et 24a, 25a), ledit au moins un dispositif d'actionnement (12) comportant un organe de maintien (26a) pour maintenir les première et deuxième roulettes (22, 23) en appui contre le rail intermédiaire (RI, RIa).

9. Installation selon l'une des revendications 1 à 8, dans laquelle le véhicule (3, 4) comporte un moyen de roulement (27) et l'ouvrage (10) comprend une structure de guidage (28) configurée pour recevoir le moyen de roulement (27) afin que le véhicule (3, 4) puisse rouler sur la structure de guidage (28).

10. Installation selon l'une des revendications 1 à 9, dans laquelle ledit au moins un galet (11) est monté mobile en rotation autour d'un axe de rotation (X) vertical.

11. Installation selon l'une des revendications 1 à 10, comprenant plusieurs galets (11) montés successivement sur l'ouvrage (10) le long d'une courbe (C1, C2) afin de dévier le câble tracteur (2) entre deux extrémités de l'ouvrage (10), et comprenant plusieurs dispositifs d'actionnement (12) couplés respectivement aux galets (11).

## Patentansprüche

1. Seilförderanlage, umfassend:
- ein Luftzugseil (2),
- ein Fahrzeug (3, 4), umfassend eine Befestigungsvorrichtung, um das Fahrzeug am Zugseil (2) zu befestigen,
- ein Baustück (10), auf dem mindestens eine Rolle (11) zwischen einer ersten Position (P1), in der die Rolle (11) mit dem Zugseil (2) in Kontakt ist, und einer zweiten Position (P2), in der die Rolle (11) von dem Zugseil (2) entfernt ist, beweglich montiert ist, und
- mindestens eine Betätigungsvorrichtung (12), die an die mindestens eine Rolle (11) gekoppelt und eingerichtet ist, um eine erste Kraft auf die Rolle (11) auszuüben, um die Rolle (11) in die erste Position (P1) zu verlagern, und um eine zweite Kraft auf die Rolle (11) auszuüben, um die Rolle (11) in die zweite Position (P2) zu verlagern, wobei die mindestens eine Betätigungsvorrichtung (12) ein Blockiersystem (30) umfasst, das eingerichtet ist, um einen verriegelten Zustand, der eine feste Abstützung des Zugseils (2) auf der zugeordneten Rolle (11), die die erste Position (P1) einnimmt, liefert, und einen entriegelten Zustand einzunehmen, in dem das Blockiersystem (30) beweglich ist, um es der zugeordneten Rolle (11) zu ermöglichen, die zweite Position (P2) einzunehmen,
**dadurch gekennzeichnet, dass** die mindestens eine Betätigungsvorrichtung (12) einen Körper (29) umfasst, und dass das Blockiersystem (30) ein Kniegelenk bildet, das die Rolle (11) mit dem Körper (29) verbindet.

2. Anlage nach Anspruch 1, bei der das Fahrzeug (3, 4) eine Steuervorrichtung (17, 17a) umfasst, die eingerichtet ist, um die mindestens eine Betätigungsvorrichtung (12) zu steuern, um die Rolle (11) zu verlagern.

3. Anlage nach Anspruch 2, bei der die Steuervorrichtung (17, 17a) eingerichtet ist, um die mindestens eine Betätigungsvorrichtung (12) fernzusteuern, um die Rolle (11) zu verlagern.

4. Anlage nach Anspruch 2, bei der die Steuervorrichtung (17, 17a) ein Auslöser (17a) ist, der eingerichtet ist, um die mindestens eine Betätigungsvorrichtung (12) zu steuern, wenn der Auslöser (17a) mit der mindestens einen Betätigungsvorrichtung (12) in Kontakt ist.

5. Anlage nach Anspruch 4, bei der die mindestens eine Betätigungsvorrichtung (12) einen Aktuator (21) umfasst, der beweglich zwischen einer ausgefahrenen Position (D1), in der die Rolle (11) ihre erste Position (P1) einnimmt, und einer eingefahrenen Position (R1), in der die Rolle (11) ihre zweite Position (P2) einnimmt, montiert ist, wobei der Aktuator (21) mit einer Laufrolle (22, 23) versehen ist, und der Auslöser (17a) eine erste Schiene (24, 24a), gegen die die Laufrolle (22, 23) rollt, um den Aktuator (21) in seine eingezogene Position (R1) zu bringen, um die zweite Kraft auszuüben, und eine zweite Schiene (25, 25a) umfasst, gegen die die Laufrolle (22, 23) rollt, um den Aktuator (21) in seine ausgefahrene Position (D1) zu bringen, um die erste Kraft auszuüben.

6. Anlage nach Anspruch 4, bei der die mindestens eine Betätigungsvorrichtung (12) einen Aktuator (21) umfasst, der beweglich zwischen einer ausgefahrenen Position (D1), in der die Rolle (11) ihre erste Position (P1) einnimmt, und einer eingezogenen Position (R1), in der die Rolle (11) ihre zweite Position (P2) einnimmt, montiert ist, wobei der Aktuator (21) mit ersten und zweiten Laufrollen (22, 23) versehen ist, und der Auslöser (17a) eine erste Schiene (24, 24a), gegen die die erste Laufrolle (22) rollt, um den Aktuator (21) in seine eingezogene Position (R1) zu bringen, um die zweite Kraft auszuüben, und eine zweite Schiene (25, 25a) umfasst, gegen die die zweite Laufrolle (23) rollt, um den Aktuator (21) in seine ausgefahrene Position (D1) zu bringen, um die erste Kraft auszuüben.

7. Anlage nach Anspruch 5 oder 6, bei der die mindestens eine Betätigungsvorrichtung (12) ein Rückstellelement (26) umfasst, das eingerichtet ist, um es der Rolle (11) zu ermöglichen, die zweite Position (P2) einzunehmen, und um die erste Kraft auf die Rolle (11) auszuüben.

8. Anlage nach Anspruch 6, bei der der Auslöser (17a) eine erste Gegenschiene (CR1, CR1a), die mit der ersten Schiene (24, 24a) eine Führung für die erste Laufrolle (22) bildet, und eine zweite Gegenschiene (CR2, CR2a), die mit der zweiten Schiene (25, 25a) eine Führung für die zweite Laufrolle (23) bildet, und eine Zwischenschiene (RI, RIa) umfasst, die die ersten und zweiten Schienen (24, 25 und 24a, 25a) verbindet, wobei die mindestens eine Betätigungsvorrichtung (12) ein Halteelement (26a) umfasst, um die ersten und zweiten Laufrollen (22, 23) an der Zwischenschiene (RI, RIa) anliegend zu halten.

9. Anlage nach einem der Ansprüche 1 bis 8, bei der das Fahrzeug (3, 4) ein Wälzmittel (27) umfasst, und das Baustück (10) eine Führungsstruktur (28) umfasst, die eingerichtet ist, um das Wälzmittel (27) aufzunehmen, so dass das Fahrzeug (3, 4) auf der Führungsstruktur (28) fahren kann.

10. Anlage nach einem der Ansprüche 1 bis 9, bei der die mindestens eine Rolle (11) drehbeweglich um eine vertikale Drehachse (X) montiert ist.

11. Anlage nach einem der Ansprüche 1 bis 10, umfassend mehrere Rollen (11), die nacheinander auf dem Baustück (10) entlang einer Kurve (C1, C2) montiert sind, um das Zugseil (2) zwischen zwei Enden des Baustücks (10) umzuleiten, umfassend mehrere Betätigungsvorrichtungen (12), die jeweils an die Rollen (11) gekoppelt sind.

## Claims

1. Cable transportation installation, comprising
an aerial hauling cable (2),
a vehicle (3, 4) comprising an attachment device to attach the vehicle to the hauling cable (2),
a structure (10) on which at least one sheave (11) is mounted movable between a first position (P1) in which the sheave (11) is in contact with the hauling cable (2) and a second position (P2) in which the sheave (11) is separated from the hauling cable (2), and
at least one actuating device (12) coupled with said at least one sheave (11) and configured to exert a first force on the sheave (11) in order to move the sheave (11) to the first position (P1), and to exert a second force on the sheave (11) in order to move the sheave (11) to the second position (P2), said at least one actuating device (12) comprising a blocking system (30) configured to occupy a blocked state providing a rigid support for the hauling cable (2) on the associated sheave (11) occupying the first position (P1), and a released state in which the blocking system (30) is movable to allow the associated sheave (11) to occupy the second position (P2),
**characterized in that** said at least one actuating device (12) comprises a body (29) and the blocking system (30) forms a toggle joint connecting the sheave (11) to the body (29).

2. Installation according to claim 1, wherein the vehicle (3, 4) comprises a control device (17, 17a) configured to control said at least one actuating device (12) in order to move the sheave (11).

3. Installation according to claim 2, wherein the control device (17, 17a) is configured to control said at least one actuating device (12) remotely in order to move the sheave (11).

4. Installation according to claim 2, wherein the control device (17, 17a) is a trigger (17a) configured to control said at least one actuating device (12) when the trigger (17a) is in contact with said at least one actuating device (12).

5. Installation according to claim 4, wherein said at least one actuating device (12) comprises an actuator (21) mounted movable between an extended position (D1) in which the sheave (11) occupies its first position (P1) and a retracted position (R1) in which the sheave (11) occupies its second position (P2), the actuator (21) being provided with a roller (22, 23) and the trigger (17a) comprises a first rail (24, 24a) against which the roller (22, 23) runs to move the actuator (21) to its retracted position (R1) in order to exert the second force, and a second rail (25, 25a) against which the roller (22, 23) runs to move the actuator (21) to its extended position (D1) in order to exert the first force.

6. Installation according to claim 4, wherein said at least one actuating device (12) comprises an actuator (21) mounted movable between an extended position (D1) in which the sheave (11) occupies its first position (P1) and a retracted position (R1) in which the sheave (11) occupies its second position (P2), the actuator (21) being provided with first and second rollers (22, 23), and the trigger (17a) comprises a first rail (24, 24a) against which the first roller (22) runs to move the actuator (21) to its retracted position (R1) in order to exert the second force, and a second rail (25, 25a) against which the second roller (23) runs to move the actuator (21) to its extended position (D1) in order to exert the first force.

7. Installation according to claim 5 or 6, wherein said at least one actuating device (12) comprises a bias element (26) configured to enable the sheave (11) to occupy the second position (P2), and to exert the first force on the sheave (11).

8. Installation according to claim 6, wherein the trigger (17a) comprises a first counter-rail (CR1, CR1a) forming, with the first rail (24, 24a), a guide for the first roller (22) a second counter-rail (CR2, CR2a) forming, with the second rail (25, 25a), a guide for the second roller (23), and an intermediate rail (RI, RIa) connecting the first and second rails (24, 25 and 24a, 25a), said at least one actuating device (12) comprising a holding means (26a) to keep the first and second rollers (22, 23) pressing against the intermediate rail (RI, RIa).

9. Installation according to one of claims 1 to 8, wherein the vehicle (3, 4) comprises a rolling means (27) and the structure (10) comprises a guide structure (28) configured to receive the rolling means (27) so that the vehicle (3, 4) can run on the guide structure (28).

10. Installation according to one of claims 1 to 9, wherein said at least one sheave (11) is mounted movable in rotation around a vertical axis of rotation (X).

11. Installation according to one of claims 1 to 10, comprising several sheaves (11) mounted successively on the structure (10) along a curve (C1, C2) in order to deflect the hauling cable (2) between two ends of the structure (10), and comprising several actuating devices (12) respectively coupled to the sheaves (11).
